(19) Europäisches Patentamt
European Patent Office
Office européen des brevets

(11) **EP 4 332 610 A1**

(12) **EUROPEAN PATENT APPLICATION**

(43) Date of publication:
**06.03.2024 Bulletin 2024/10**

(21) Application number: **22193403.7**

(22) Date of filing: **01.09.2022**

(51) International Patent Classification (IPC):
**G01S 5/02** *(2010.01)*  **G01S 5/04** *(2006.01)*

(52) Cooperative Patent Classification (CPC):
**G01S 5/0249; G01S 5/0226; G01S 5/04;**
G01S 2205/04

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Luxspace Sàrl**
**6832 Betzdorf (LU)**

(72) Inventors:
• **RIES, Philippe**
**6132 JUNGLINSTER (LU)**
• **SCHMITZ, Pascal**
**54298 AACH (DE)**

(74) Representative: **Lavoix**
**2, place d'Estienne d'Orves**
**75441 Paris Cedex 09 (FR)**

(54) **AN IDENTIFICATION METHOD FOR IDENTIFYING AT LEAST ONE SUSPICIOUS WATERCRAFT, A LOCALIZATION METHOD FOR LOCALIZING SAID SUSPICIOUS WATERCRAFT, RELATED IDENTIFICATION ELECTRONIC DEVICE, LOCALIZATION ELECTRONIC DEVICE AND COMPUTER PROGRAM**

(57) The present invention concerns an identification method for identifying by a satellite system (15), at least one suspicious watercraft (24) among a plurality of watercrafts (10). Each watercraft (23, 23A, 23B) has an emitting antenna configured to emit a respective radar signal, which forms an antenna train and comprising a plurality of pulse trains when being received.

The method comprises receiving radar signals from the plurality of watercrafts, determining a respective signature for each watercraft, from the received radar signals; and identifying the suspicious watercraft based on the determined signatures.

Each signature comprises a pulse repetition interval of the watercraft; an antenna scan interval of the watercraft; and a pulse train shape of the watercraft.

Preferably, each signature in addition comprises a frequency of each pulse of the watercraft and a pulse width of each pulse of the watercraft.

FIG.1

**Description**

The present invention concerns an identification method for identifying by a satellite system, at least one suspicious watercraft among a plurality of watercrafts.

The present invention also concerns a localization method for localizing, by a satellite system, said suspicious watercraft. The localization method uses the identification method.

The present invention also concerns an electronic identification device and an electronic localization device.

The present invention finally concerns a computer program comprising software instruction(s) able to implement one of said methods.

Oceans are necessary for the development of our society. Actually, about 17 percent of the global animal protein intake comes from fish. Fish catering is thus a fundamental to feed the global population.

In addition, about 90 percent of all goods are transported by ships making the world's economy relying on maritime transport routes.

In addition, oceans are also terrific sources of energy, via oil and gas offshore mining or off shore wind farms.

However, oceans are also vulnerable environments suffering several threats.

Firstly, oceans suffer environmental threats by the illegal exploitation of natural resources such as illegal foreigner fishing or maritime pollution due to illegal sea dumping.

Secondly, oceans are also the location of piracy, robbery and maritime terrorism threatening lives of sailors and tourists enjoying the sea leisure.

The size of oceans makes maritime surveilling and operation a challenge.

Traditional monitoring means such as patrol boats, coastal radars and drones are costly and limited by endurance and coverage. Specifically, said means are mostly limited to coast areas preventing off shore interventions.

Satellites systems can overcome some of said limitations thanks to their global coverage. Some systems such as AIS (Automatic Identification System), LRIT (Long-Range Identification and Tracking) or VMS (Vessel Monitoring System) are traditional ship reporting systems. However, these systems are limited to cooperative watercrafts, which accept to transmit information to the satellite system. Said watercraft are known as "white targets".

Other satellite systems such as SAR (Synthetic-Aperture Radar) of optical EO (optical Earth Observation) make it possible to detect non-cooperative watercraft, known as "black target". However, the coverage of these systems is highly limited and they cannot perform an identification of said watercraft. In other words, they cannot recognize twice a watercraft and make sure that it is the same watercraft.

It thus exists a need to a method and a related device to identify a watercraft no-matter whether it is cooperative or not.

One of the aims of the present invention is to propose an identification method for identifying by a satellite system, at least one suspicious watercraft among a plurality of watercrafts, no matter if the suspicious watercraft is cooperative or not.

For this purpose, the invention relates to an identification method for identifying by a satellite system, at least one suspicious watercraft among a plurality of watercrafts, each watercraft having an emitting antenna configured to emit a respective radar signal, which forms an antenna train and comprising a plurality of pulse trains when being received, a time interval between two successive pulse trains being substantially constant and called antenna scan interval,

each pulse train comprising a plurality of pulses forming a pulse trains shape, a time interval between two successive pulses of a respective pulse train being substantially constant and called pulse repetition interval,
the method comprising:

- receiving radar signals from the plurality of watercrafts;
- determining a respective signature for each watercraft, from the received radar signals; and
- identifying the suspicious watercraft based on the determined signatures of its emitting antenna;

wherein each signature comprises:

- the pulse repetition interval of the emitting antenna;
- the antenna scan interval of the emitting antenna; and
- a pulse train shape of the emitting antenna,

preferably, each signature in addition comprises a frequency of each pulse of the emitting antenna and a pulse width of each pulse of the emitting antenna.

With the identification method, the determined signature makes it possible to identify uniquely the suspicious watercraft among the plurality of watercraft. It is thus possible to maintain the watercraft under survey, even if it is moving and to transmit this information to competent authorities to plan an intervention.

In particular embodiments, the identification method comprises one or more of the following features, taken alone or in any technically possible combination:

- the determining step comprises the following sub-steps:

    - a first tagging phase, wherein at least one first-level tagging group is formed based on the pulses;
    - a second tagging phase, wherein at least one second-level tagging group is formed based on the pulse trains; and
    - a third tagging phase, wherein at least one third-level tagging group is formed based on the antenna trains,

- the first tagging-phase includes:

    - for each pulse of the radar signals, calculating a pulse width and a frequency,
    - classifying the pulses based on the calculated pulse widths and frequencies to form the first-level tagging group(s),

- during the first tagging phase, an amplitude of each pulse and a time of arrival of each pulse are calculated,

    the second tagging phase including for each first-level group:

    - identifying pulse trains from the pulses;
    - determining the pulse repetition interval for at least one identified pulse train;
    - for each pulse train, determining the pulse train shape from the amplitude of each pulse of the pulse train and from the time of arrival of said pulses; and
    - classifying each pulse train based on the identified pulse train shape to form the second-level group(s);

    preferably, the pulse train shape being quadratic and being characterized by a quadratic coefficient A:

$$AMP = A.TOA^2 + B.TOA + C$$

    where B and C are respectively a linear coefficient and a constant coefficient.

    - the third tagging phase includes, for each second-level group:
    - identifying antenna trains from the pulses trains;
    - determining the scan interval respective to each identified antenna trains; and
    - classifying the antenna trains based on their respective antenna scan interval to form the third-level group(s),

- the third tagging phase further includes for each antenna train of each third-level group:

    - calculating an antenna train mean pulse repetition interval of the antenna train from the pulse repetition intervals of each pulse train of the antenna train;

    - calculating an antenna's mean pulse train shape of the antenna train from the pulse train shape of each pulse train of the antenna train;

    the signature respective for each watercraft comprising the antenna train mean pulse repetition interval, the antenna mean pulse train shape and the antenna scan interval,
    - during at least one among the first, the second or the third tagging phase, a sliding window is applied on the radar signals, the classification being performed only for pulses within the sliding window, and
    - the signature uniquely identifies the suspicious watercraft among the plurality of watercrafts.

The invention also relates to a localization method for localizing, by a satellite system, at least one suspicious watercraft among a plurality of watercrafts, each watercraft having an antenna emitting a respective radar signal, the localization method comprising the following steps:

- acquiring the radar signals from the plurality of watercrafts;

- identification of the suspicious watercraft from the acquired radar signals;
- localizing the suspicious watercraft from a signature of the suspicious watercraft obtained when identifying the suspicious watercraft; and
  identifying the suspicious watercraft being performed by implementing an identification method as described here-above.

With the localization method, it is possible to localize the identified watercraft even if it is moving. This makes it possible to improve quality of information that can be transmitted to competent authorities.

In particular embodiments, the identification method comprises one or more of the following features, taken alone or in any technically possible combination:

- the satellite system comprises a unique satellite,
- the satellite system comprises a forward-looking antenna and a backward-looking antenna,

   the forward-looking antenna defining a front beam and the backward-looking antenna defining a rear beam, each beam representing watercraft's locations from which radar signals are acquirable by the satellite system, the satellite system moving with respect to the watercrafts, the suspicious watercraft being in the front beam at a first instant and in the rear beam at a second instant distinct from the first instant, wherein acquiring the radar signals from the plurality of watercrafts comprises:

  - a first acquiring step of the radar signals from the plurality of watercrafts, from the forward-looking antenna, at the first instant; and
  - a second acquiring step of the radar signals from the plurality of watercrafts, from the backward-looking antenna, at the second instant,

   identification of the suspicious watercraft from the acquired radar signals comprising:

  - a first identification step of the suspicious watercraft from the radar signals acquired during the first acquiring step; and
  - a second identification step of the suspicious watercraft from the radar signals acquired during the second acquiring step,

   localizing the suspicious watercraft from a signature of the suspicious watercraft obtained when identifying the suspicious watercraft comprises : performing a triangulation of the location of the suspicious watercraft from a first signature obtained during the first identification step and a second signature obtained during the second identification step; and

- each beam defines a narrow angular opening, preferably between 1.2 and 6 degrees.

The invention also relates to an electronic identification device comprising technical means configured to implement an identification method as described here above. The invention also relates to an electronic localization device comprising technical means configured to implement a localization method as previously developed.

The invention also relates to a computer program comprising software instruction(s) which, when being executed by a computer, implement a method as described here above.

Further features and advantages of the invention will become more apparent from the following description of embodiments of the invention, given by way of example only and with reference to the attached drawings in which:

- Figure 1 is a schematic representation of a satellite flying over a plurality of watercrafts;
- Figure 2 is an example of an acquired radar signal emitted by a rotary antenna of a watercraft;
- Figure 3 is a flowchart of an identification method according to the invention;
- Figure 4 is a scheme illustrating a classifying step of the identification method of Figure 3;
- Figure 5 is a flowchart of a localization method according to a first embodiment;
- Figure 6 is a schematic representation of a satellite's motion regarding a watercraft;
- Figure 7 is a flowchart of a localization method according to a second embodiment; and
- Figure 8 is an illustration of a localization step of the localization method of Figure 7.

In the following description, the expressions "substantially equal" and "substantially constant" means an equality, respectively a constancy, at plus or minus ten percent and preferably plus or minus five percent.

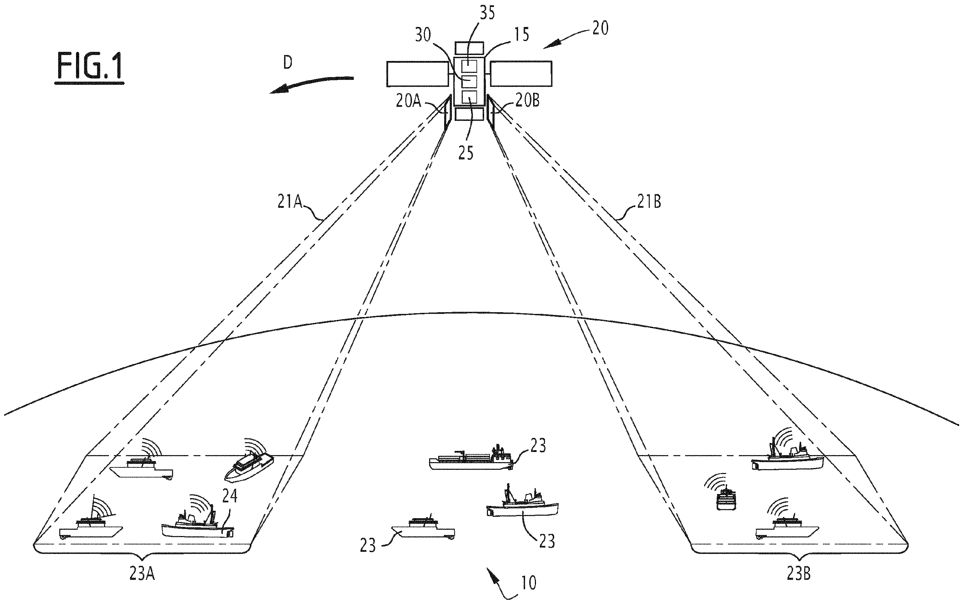

As shown in Figure 1, a plurality of watercrafts 10 are sailing on the sea. The watercrafts may comprise cargo ships, cruise ships, sailing boats, out board boats, trawlers, tankers, sea fishing boat or yachts.

As known *per se,* each watercraft 10 comprises a navigation radar, also known under the acronym NAVRAD, emitting a respective radar signal. The NAVRAD is a navigation tool making it possible for each watercraft to determine its location with respect to the location of other watercrafts. The NAVRAD principle will be detailed hereinafter.

The navigation radar is for example a rotating antenna configured to emit regularly a pulse of a predefined amplitude. The amplitude of the emitted pulse is preferably constant.

A time interval between two successive emitted pulses is fixed and depends on the NAVRAD configuration. Such time is called "Pulse Repetition Interval (PRI)".

Due to the rotation of the antenna, a receiver only receives the radar signal when the rotary antenna is substantially oriented in its direction. Thus, for a substantially fixed receiver, the received pulses are grouped as a pulse trains. In addition, since the antenna is rotating the amplitude of the received pulses evolve with the time. Actually, the received pulse(s) emitted when the antenna is perfectly oriented in the receiver's direction, is maximized, while it is lower when the antenna is not perfectly oriented in the receiver's direction.

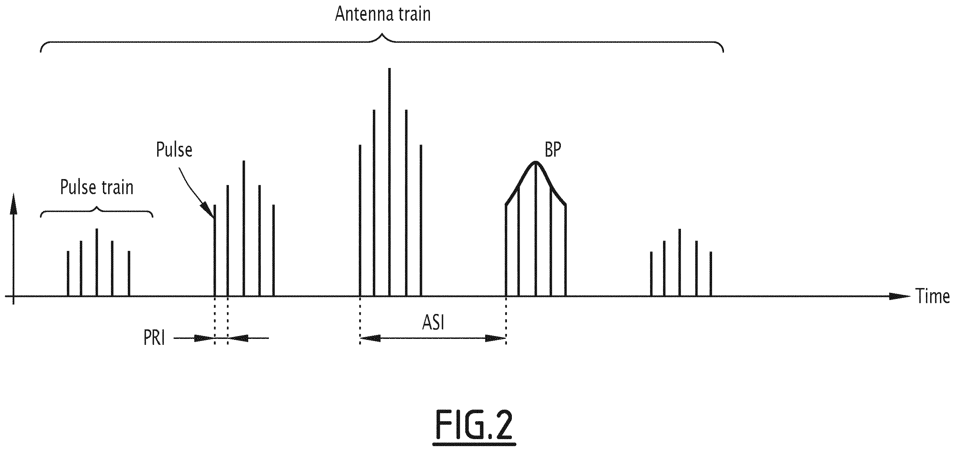

Figure 2 illustrates the result of an acquisition of said radar signal. As it can be seen in Figure 2, the acquired signal comprises a plurality of pulses grouped in several pulse trains corresponding to the set of pulses emitted when the NAVRAD is oriented to the receiver. Two successive pulse trains are separated by a time interval, named "Antenna Scan Interval (ASI)", corresponding to the rotation period of the rotary antenna of the NAVRAD. The rotary antenna rotates at a substantially constant velocity. The antenna scan interval (ASI) is substantially constant.

The set of pulse trains received is named "Antenna Train". Its time length corresponds to the duration for which the receiver is able to receive radar signals from the NAVRAD.

Referring to Figure 1, a satellite system 15, which is for example composed of a unique satellite 15, is flying over the plurality of watercrafts 10. The satellite 15 is preferably not a geosynchronous satellite i.e. its orbital period is not equal to the orbital period of the Earth. Thus, the satellite 15 is moving with respect to the Earth in a motion direction D.

The satellite 15 comprises an antenna 20 configured to receive electromagnetic signals. Preferably, the satellite comprises two antennas 20A, 20B. One of the antennas, named forward-looking antenna 20A, is oriented sideways and more towards the motion direction D of the satellite 15. The other antenna, named backward looking antenna, is oriented sideways (same side as forward-looking antenna) and more towards the opposite direction to the motion direction D.

The forward-looking antenna 20A is preferably operable as a monopulse antenna known *per se,* or as a fixed beam antenna. For this purpose, the forward-looking antenna 20A may be formed of four identical subarrays of antenna.

A direction of arrival DOA of said pulses may be determined based on the received pulses.

The backward looking antenna 20B is preferably operable as a monopulse antenna known *per se,* or as a fixed beam antenna. For this purpose, the backward-looking antenna 20B may be formed of four identical subarrays of antenna..

The forward-looking antenna 20A defines a front beam 21A. If an emitter is located in the front beam 21A and emits a radar signal in the direction of the forward-looking antenna 20A, said forward-looking antenna 20A would receive it.

Similarly, the backward-looking antenna 20B defines a rear beam 21B configured similarly as the front beam 21A.

Received pulses from emitter outside the front 21A or rear 21B beam may be received with a received amplitude up to 50% of their maximum received amplitude. However, based on the direction of arrival of said, these pulses may be rejected.

Watercrafts 23A, 23B, which are located in the front beam 21A or in the rear beam 21B are named "emitters in a receiver antenna beam".

Preferably, each beam 21A, 21B has a narrow angular opening that allows on one hand a good direction determination of receive signals and on the other hand to capture enough pulses of antenna trains, for example between 1.2 and 6 degrees in azimuth. The azimuth angle between the two individual beams (forward/backward) influences localization accuracy and coverage and can be for example between 50 and 90 degrees. If a watercraft is located outside of the angular opening, the amplitude of the signal received from this emitter will be at least 50 percent lower than if the watercraft was located in the angular opening.

In the example of Figure 1, the plurality of watercrafts 10 comprises watercrafts in a receiver antenna beam 24 and watercrafts outside of a receiver antenna beam 23. The satellite is configured to acquire radar signal emitted by the watercrafts in a receiver antenna beam 23A, 23B but not from the watercrafts outside of a receiver antenna beam 23, or to reject said pulses based on the direction of arrival.

More specifically, the watercrafts 23A, 23B in a receiver antenna beam comprises watercrafts 23A in the front beam 21A and watercrafts 23B in the rear beam 21B.

The radar signal received by each of the forward-looking antenna 20A and the backward-looking antenna 20B is the radar signal from the NAVRAD of the respective watercrafts 23A, 23B in a receiver antenna beam.

It is clear that, since the satellite 15 is not a geosynchronous satellite, the watercrafts 23A, 23B in a receiver antenna beam may change from an instant to another.

In the example of Figure 1, one of the watercraft 23A in the front beam 21A has a suspicious behavior and is named "suspicious watercraft" 24.

The satellite 15 also comprises an identification electronic device 25, localization electronic device 30, and preferably a communication device 35. Each of these devices 25, 30 is configured to be connected to the forward-looking antenna 20A and to the backward-looking antenna 20B.

In the example of Figure 1, both devices 25, 30 are connected to the said antennas 20A, 20B.

The identification device 25, the localization device 30 and the communication device 35 are for example each realized in the form of a software, or a software brick, executable by a processor. A memory is then able to store an identification software, a localization software and a communication software.

Alternatively, the identification device 25, the localization device 30 and the communication device 35 are each realized in the form of a programmable logic component, such as an FPGA (Field Programmable Gate Array) or an integrated circuit, such as an ASIC (Application Specific Integrated Circuit).

When the identification device 25, the location device 30 and the communication software 35 are implemented as one or more software programs, i.e. as a computer program, it is further adapted to be stored on a computer-readable medium. The computer-readable medium is, for example, a medium capable of storing electronic instructions and of being coupled to a bus of a computer system. For example, the readable medium is an optical disk, a magneto-optical disk, a ROM, a RAM, any type of non-volatile memory (e.g. EPROM, EEPROM, FLASH, NVRAM), a magnetic card or an optical card. The readable medium then stores a computer program with software instructions.

According to a non-represented embodiment, the identification device 25 and/or the localization device 30 are remote from the satellite 15, for example at the surface of the Earth. The satellite 15 may thus only comprise the communication device 35 configured to send the received radar signals to the identification device 25 and/or to the localization device 30.

The identification device is configured to implement an identification method 100 to identify, via the satellite 15, the suspicious watercraft 24. The forward-looking antenna 20A is operated as a fixed beam antenna. The identification method 100 is firstly explained from the forward-looking antenna 20A. However, the identification method 100 is similarly applicable from the backward-looking antenna 20B.

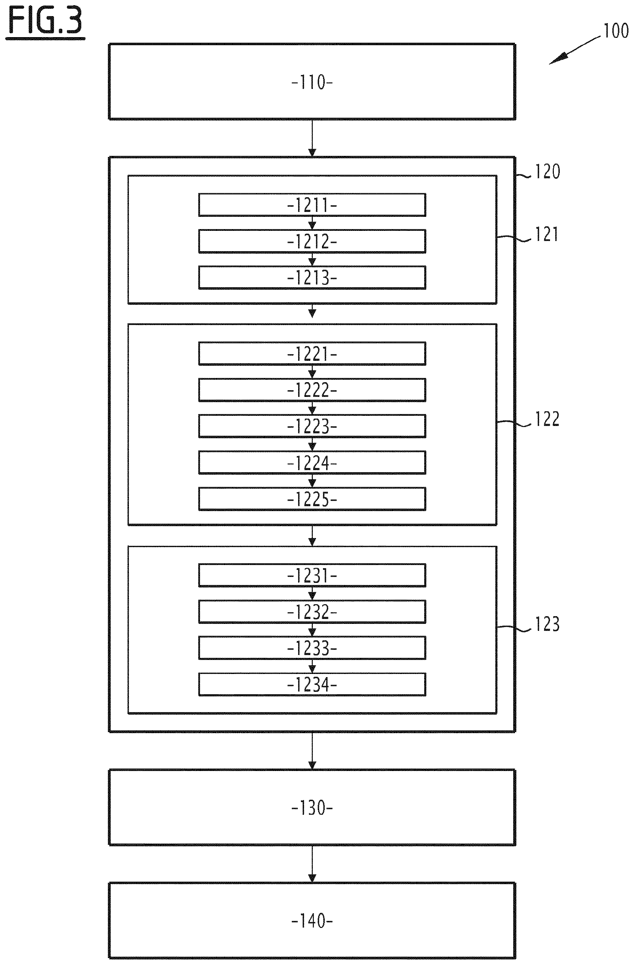

In reference to Figure 3, the identification method 100 comprises a receiving step 110 wherein the satellite 15 receives the radar signals from the plurality of watercrafts 10. More specifically, the forward-looking antenna 20A receives radar signals from each watercraft 23A in the front beam 21A, comprising the radar signals from the suspicious watercraft 24. The received signal is thus composed of the radar signals received from each watercraft 23A in the front beam 21A. Each radar signal is completely mixed with others so that it is not possible, just by having a look at the received signal, to determine which part of the receive signal comes from each NAVRAD.

Then, the identification method 100 comprises a determining step 120 wherein the identification device 25 determines a respective signature for each watercraft, from the radar signals.

Preferably, the determining step 120 comprises a first tagging phase 121 including a pulse detection sub-step 1211. During the pulse detection sub-step 1211, each pulse composing the received signal is detected and distinguished from other pulses. As known *per se,* the pulse detection may be performed by thresholding the received signal. As an example, the received signal may firstly be downconverted and digitized before being thresholded.

Then, each pulse of the received signal is detected and the first tagging phase 121 comprises a calculating sub-step 1212.

During the calculating sub-step 1212, the identification device 25 calculates the pulse width $T_p$ and the frequency $Freq$ of each detected pulse.

Advantageously, for each pulse, a time of arrival $TOA$ of said pulse and the amplitude $AMP$ of said pulse and the direction of arrival $DOA$ of each pulse are also calculated during the calculating sub-step 1212.

Preferably, the pulse detection sub-step 1211 and the calculating sub-step 1212 are performed simultaneously. In other words, each time a pulse is detected, its pulse width $T_p$ and frequency $Freq$ are calculated.

For this purpose, each time the signal exceeds the predetermined threshold, the instant of said threshold-exceed is noted as the time of arrival $TOA$ of the pulse, the length during which the signal is higher than the threshold is the pulse width $T_p$, and the amplitude of the signal is noted as the amplitude $AMP$ of the pulse. The frequency $Freq$ of the pulse is for example obtained by applying a derivative based frequency estimator algorithm known *per se,* to the portion of signal corresponding to the pulse.

Then, the first tagging phase 121 also comprises a first classifying sub-step 1213 wherein at least one first-level tagging group is formed.

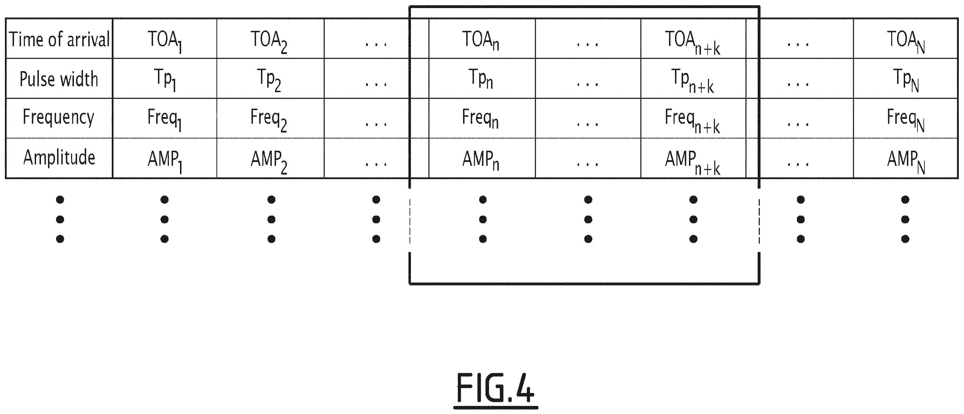

The first classifying sub-step 1213 preferably comprises ordering in a table each detected pulse with their pulse width $T_p$, frequency $Freq$ and preferably their time of arrival $TOA$ and amplitude $AMP$. Preferably, the table is ordered in function of increasing times of arrival $TOA$, as represented in Figure 4.

Then, the first classifying sub-step 1213 comprises applying a sliding window on said table. The length of the sliding window is the maximum expected pulse train length from any radar.

Initially, the sliding window is applied on the table. Inside the sliding window each pulse is put into a respective first-level tagging group according to its pulse width Tp and frequency Freq. More specifically, when the window slides, a new pulse enters the sliding window and a pulse leave the sliding window.

The identification device 25 checks if the new pulse has a similar pulse width Tp and frequency Freq, and optionally direction of arrival DOA, as already existing first-level tagging groups in the sliding window. If so, the identification device 25 adds the new pulse to said corresponding first-level tagging group. If not, a new first-level tagging group is created in the sliding window and the identification device 25 adds the new pulse to said first-level tagging group.

The identification device 25 checks if the leaving pulse is the only pulse in its respective first-level tagging group. If so, the pulse and the corresponding first-level tagging group leave the sliding window. If not, only the pulse leaves the sliding window.

Then, the sliding window slides again.

When the sliding window reaches the last pulse, the first tagging phase 121 ends.

After the first tagging phase 121, several first-level tagging groups are formed. Each first-level tagging group corresponds to pulses that might come from the same NAVRAD. However, each pulse corresponding to a first-level tagging group does no necessary come from the same NAVRAD. Actually, two distinct NAVRAD might emit pulses with same pulse widths Tp and same Frequencies Freq.

For each pulse in each first-level tagging group, the pulse width Tp, the frequency Freq, and preferably the time of arrival TOA, and the amplitude AMP are called level-1-tag.

Then, the method comprises a second tagging phase 122 comprising a first identifying sub-step 1221, wherein at least one pulse train is identified from the pulses.

For that purpose, the identification device 25 may apply a de-interleaved technique known *per se* as "PRI transform". This technique applied over the sliding window makes it possible to identify pulse trains.

The second tagging phase 122 also comprises a first determining sub-step 1222 wherein the pulse repetition interval PRI for at least one identified pulse train is determined.

Preferably, when applying the de-interleaved technique, the identification device 25 determines which pulse repetition intervals PRI exist in the sliding window as well as which pulses give rise to which of these pulse repetition interval PRI. Then, the pulse repetition interval PRI is determined for each pulse train.

The second tagging phase 122 then comprises a second determining sub-step 1223 wherein the identification device 25 determines, for each pulse train, the pulse train shape also known as beam pattern BP.

Preferably, the identification device 25 determines said beam pattern BP from the amplitude AMP of each pulse of the pulse train and from the time of arrival TOA of said pulses.

For this purpose, the identification device 25 considers that the beam pattern BP may be expressed as a quadratic function of the time of arrival TOA of each pulse forming the pulse train. During the second determination sub-step 1223, the identification device 25 determines a quadratic coefficient A, a linear coefficient B and a constant coefficient C such that:

$$AMP = A.TOA^2 + B.TOA + C$$

The determination of the first A, the second B, and the third C coefficients is for example performed by applying an optimization algorithm such as a mean-square algorithm. The quadratic coefficient A is kept as the beam pattern BP, characterizing the beam pattern shape.

The second tagging phase 122 optionally comprises a second calculation sub-step 1224 wherein, for each pulse train, the level-1-tags are condensed into level-2-tags, respective of the pulse trains and comprising: a time of arrival of the pulse train TOA_PT, a mean pulse width of the pulses of pulse train TP PT, a mean frequency of the pulses of the pulse train Freq_PT, a mean amplitude of the pulses of the pulse train AMP_PT, and a mean direction of arrival DOA_PT, the pulse repetition interval PRI and beam patter BP corresponding to the quadratic coefficient.

Except the beam pattern BP and pulse repetition interval PRI, during the second calculating sub-step 1224, the identification device 25 may be configured to calculate the level-1-tags representation in level-2-tags according to the following equations:

$$TOA\_PT = min(TOA_1, ..., TOA_N)$$

$$TP\_PT = mean(TP_1, ..., TP_N)$$

$$Freq\_PT = mean(Freq_1, ..., Freq_N)$$

$$AMP\_PT = \text{mean}(AMP_1, ..., AMP_N)$$

$$DOA\_PT = \text{mean}(DOA_1, ..., DOA_N)$$

wherein the indexes indicates the number of the pulse in the pulse train,

min() is the minimum function, and

mean() is the mean function.

The second tagging phase 122 in addition comprises a second classifying sub-step 1225, wherein the pulse trains are classified to form at least one second-level tagging group. The second classifying sub-step 1225 is similar to the first classifying sub-step 1213 except that the sliding window is applied on the level-2-tags instead of the level-1-tags, and that the parameter inspected when a pulse train enters or exits the sliding window is the beam pattern BP.

After the second classifying sub-step 1225, preferably some second level tagging groups are formed. It is not sure that two pulse trains in a same second level tagging group come from the same NAVRAD. However, it is ensured that two pulse trains from different second level tagging groups do not come from the same NAVRAD.

The determination step 120 then comprises a third tagging phase 123.

The third tagging phase 123 comprises a second identifying sub-step 1231, wherein the identification device 25 identifies at least one antenna train among the plurality of pulse trains.

The second identifying sub-step 1231 is similar to the first identifying sub-step 1221 except that the de-interleaved technique is applied based on the sliding window of the second classifying sub-step 1225.

The third tagging phase 123 also comprises a second determining sub-step 1232 wherein the antenna scan interval ASI for at least one identified antenna train is determined.

Preferably, when applying the de-interleaved technique, the identification device 25 determine which antenna scan intervals ASI exist in the sliding window as well as which pulse train give rise to which of these antenna scan intervals ASI. Then, the Antenna scan interval ASI is determined for each antenna train. The sliding window length for the determination of the antenna scan interval ASI has as length the maximum expected antenna train length.

The third tagging phase 123 optionally comprises a third calculation sub-step 1233 wherein, for each antenna train, the level-2-tags are condensed into level-3-tags, respective of the antenna trains and comprising: a time of arrival of the antenna train TOA_AT, a mean pulse width of the pulses of antenna train TP_AT, a mean frequency of the pulses of the antenna train Freq_AT, a mean amplitude of the pulse of the antenna train AMP_AT, , a mean direction of arrival of a beam patter DOA_AT, a mean beam patter BP AT of pulse trains of the antenna train, a mean pulse repetition interval PRI_AT of pulse trains of the antenna train, and the antenna scan interval ASI.

Except the antenna scan interval ASI, during the third calculating sub-step 1233, the identification device 25 may be configured to calculate the level-3-tags according to the following equations:

$$TOA\_AT = \text{min}(TOA\_PT_1, ..., TOA\_PT_N)$$

$$TP\_AT = \text{mean}(TP\_PT_1, ..., TP\_PT_N)$$

$$Freq\_AT = \text{mean}(Freq\_PT_1, ..., Freq\_PT_N)$$

$$AMP\_AT = \text{mean}(AMP\_PT_1, ..., AMP\_PT_N)$$

$$DOA\_AT = \text{mean}(DOA\_PT_1, ..., DOA\_PT_N)$$

$$BP\_AT = \text{mean}(BP_1, ..., BP_N)$$

$$PRI\_AT = \text{mean}(PRI_1, ..., PRI_N)$$

wherein the indexes indicates the number of the pulse train in the antenna train.

The third tagging phase 123 in addition comprises a third classifying sub-step 1234, wherein the antenna trains are classified to form at least one third-level tagging group. The third classifying sub-step 1234 is similar to the first classifying sub-step 1213 and to the second classifying sub-step 1225 except that the sliding window is applied on the level-3-tags instead of the level-1-tags or the level-2-tags, and that the parameter inspected when an antenna train enters or exits the sliding window is the antenna scan interval ASI.

After the third classifying sub-step 1234, preferably some third level tagging groups are formed. It is now ensured that two pulse trains in a same third level tagging group come from the same NAVRAD.

The determining step 120 finally comprises a determination phase 124 wherein the identification device 25 determines a respective signature for each watercraft 23A in the front beam 21A.

Each signature comprises at least the pulse repetition interval PRI of the watercraft 23A, the antenna scan interval ASI of the watercraft 23A, and the pulse train shape BP, i.e. beam pattern, of the watercraft 23A.

Preferably, each signature in addition comprises the frequency Freq and the pulse width Tp of the pulses emitted by said watercraft 23A.

More preferably, each signature comprises the level-3-tags of each NAVRAD. In other words, each signature comprises the time of arrival of the antenna train TOA_AT, the mean pulse width of the pulses of antenna train Tp_AT, the mean frequency of the pulses of the antenna train Freq_AT, the mean amplitude of the pulse of the antenna train AMP_AT, the mean direction of arrival DOA_AT of the antenna train, the mean beam pattern BP_AT of pulse trains in the antenna train, the mean pulse repetition interval PRI_AT of pulse trains in the antenna train and the antenna scan interval ASI.

Each signature uniquely identifies a respective watercraft 23A, and specifically the suspicious watercraft 24.

The identification method 100 then comprises an identifying step 130 wherein the identification device identifies the suspicious watercraft 24 based on the determined signatures.

For this purpose, the identification device 25 may associate to each watercraft 23A, its respective signature. Each time the identification device 25 receives new radar signals from the suspicious watercraft 24, it will apply the determining step 120 to determine its signature and recognize that the newly determined signature matches the already determined signature.

Optionally, the identification method 100 in addition comprises a communication step 140, wherein the identification device 25 communicates, with the help of the communication device 35, the signature of the suspicious watercraft 24, to a remote device located on Earth.

The identification method 100 then ends and the suspicious watercraft 24 is identified.

It is clear that the described identification method 100 is applicable from signal received by the backward-looking antenna 20B to identify a suspicious watercraft among the watercraft 23B in the rear beam 21B.

As already explained, the satellite system 15 comprises a localization device 30.

The localization device 30 is configured to implement the following localization method 200.

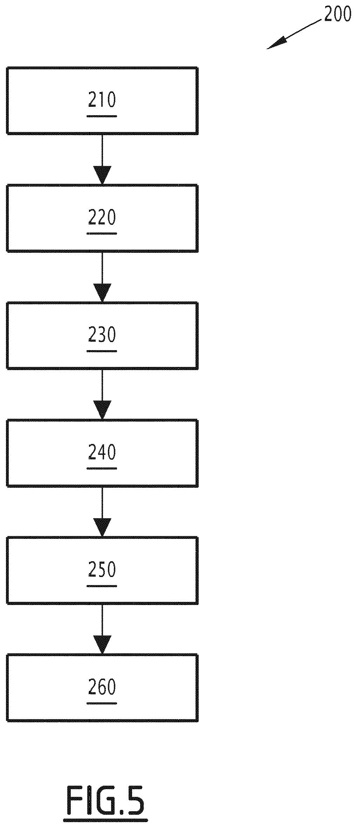

A first embodiment of the localization method 200 will now be described in reference to Figure 5.

Initially, the satellite is flying over the watercrafts 10 in the motion direction D and the forward-looking antenna 20A is operated as fixed beam, so that, at a first instant, some watercraft 23A are in the front beam 21A.

The watercrafts 23A in the front beam 21A comprises the suspicious watercraft 24.

The localization method 200 comprises a first acquiring step 210 wherein, the localization device 30 acquires the radar signals from the plurality of watercrafts 10.

In the first embodiment, during the first acquiring step 210, the forward-looking antenna 20A receives radar signal from the watercrafts 23A in the front beam 21A comprising the suspicious watercraft 24.

The localization method 200 then comprises an identification step 220, wherein the localization device 30 identifies the suspicious watercraft 24 from the acquired radar signals, for example with help of the identification device 25.

For example, the identification step 220 of the localization method 200 is performed by implementing the identification method 100 already described.

After the identification step 220, the localization device 30 has the signature of the suspicious watercraft 24.

Preferably, the first acquiring step 210 and the first identification step 220 are iterated several times during the motion of the satellite 15.

Optionally, the satellite moves according to motion direction D so that, at a second instant, the suspicious watercraft 24 is now in the rear beam 21B.

The localization method 200 in addition comprises a second acquiring step 230, wherein the localization device 30 acquires radar signals from the backward-looking antenna 20B.

Then, the localization method 200 comprises a second identification step 240, wherein the localization device 30 identifies the suspicious watercraft 24 from the radar signals acquired during the second acquiring step 230. For this purpose, the identification device 25 for example implement the identification method 200 from radar signals acquired during the second acquiring step 230. The signature of the suspicious watercraft 24 is redetermined making it possible for the localization device to recognize the suspicious watercraft 24.

Preferably, the second acquiring step 230 and the second identification step 240 are iterated several times during the motion of the satellite 15.

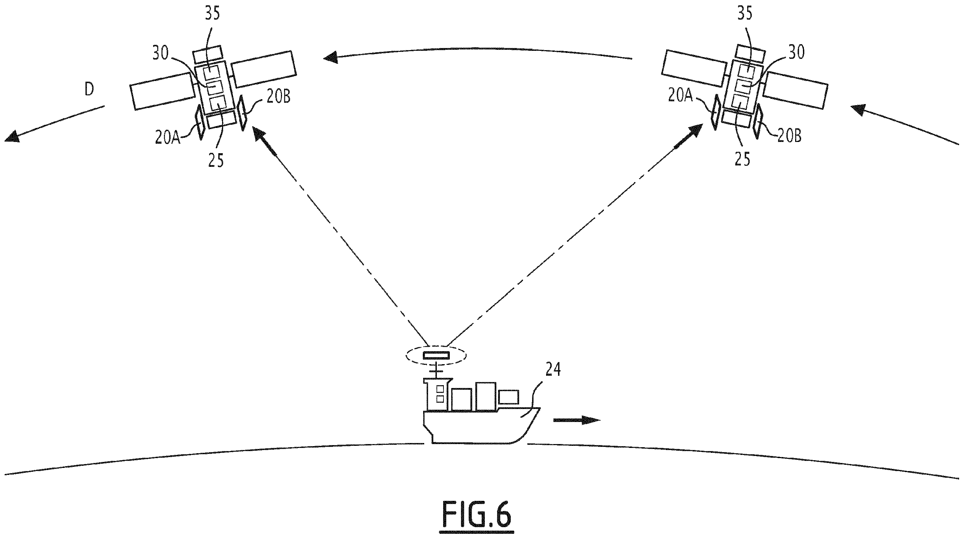

The first acquiring 210 and identification 220 steps and the second acquiring 230 and identification 240 steps are illustrated in Figure 6 wherein the satellite 15 is represented at the first instant (right part of Figure 6) and the second instant (left part of Figure 6).

Then, the localization method 200 comprises a determining step 250 of the suspicious watercraft 24 from the signatures.

During the determination step 250, the localization device 30 for example proceeds to a triangulation of the location of the suspicious watercrafts from the locations of the satellite 15 when the localization device 30 acquired the position radar signals from the suspicious watercraft 24. Such triangulation mechanism is well described in the art and only requires one satellite 15 since the satellite 15 is moving way faster than the suspicious watercraft 24. Thus, it can be assumed that location of the suspicious watercraft 24 is substantially constant during the motion of the satellite 15.

If the localization method 200 comprises several first acquiring steps 210, several first identification steps 220, and/or several second acquiring steps 230 and several second identification steps 240, the localization step 250 comprises the calculation of a mean location of the suspicious watercraft 24 among the different locations of the suspicious watercraft 24 that can be determined by triangulation.

The localization method 200 optionally comprises a communication step 260, wherein the localization device 30 communicates, with the help of the communication device 35, the determined location of the suspicious watercraft 24, to a remote device located on Earth.

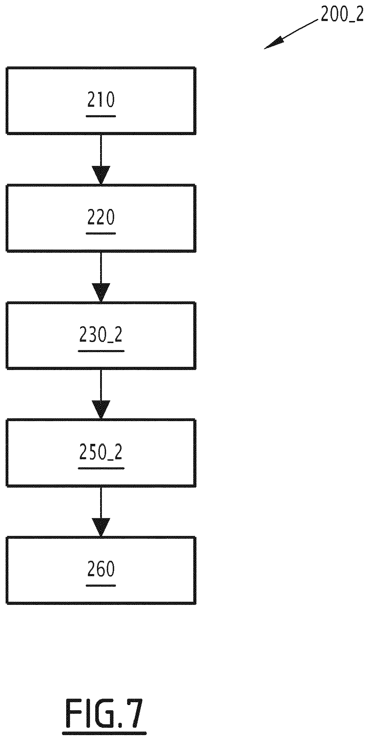

A second embodiment of the localization method 200_2 will now be described in reference to Figure 7.

In the second embodiment, the localization method 200_2 comprises the first acquiring step 210 and the first identification step 220 as in the first embodiment. In this second embodiment, the localization method 200_2 preferably comprises several first acquiring steps 210 and several first identification steps 220.

However, in the second embodiment, the localization method 200_2 does not comprise the second acquiring step 230 and the second identification step 240. Instead, the localization method comprises a calculating step 230_2 wherein the localization device calculates, from the acquired radar signals, an elevation angle and an azimuth for each pulse corresponding to the suspicious watercraft 24. Such calculation is already known in the art since both the forward-looking antenna 20A and backward-looking antenna 20B are composed of several monopulse subarrays.

Still during the calculation step 230_2, the localization device 30 calculates, from the elevation angles and azimuths, and for each first acquiring and identification steps, the direction of arrival of the radar signals. Preferably, the direction of arrival of the radar signals is the mean antenna direction of arrival DOA_AT of the antenna train comprises in the signature of each signature, already calculated in the first identification step 220.

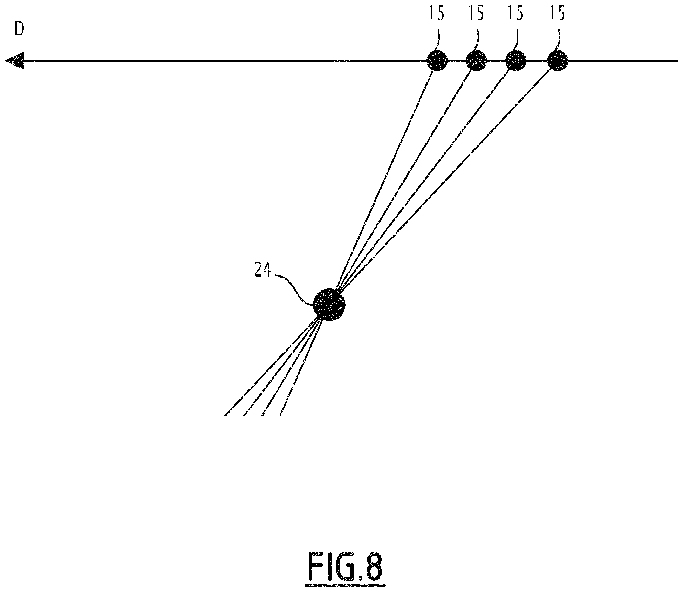

Then, as in the first embodiment, the localization method 200_2 comprises a localization step 250_2. However, in the second embodiment, during the localization step 250_2, the localization device 30 calculates the location of the suspicious watercraft 24 by determining the "cross location" of each direction of arrival, considering the motion of the satellite 15. Where "cross location" meaning the crossing of the direction of arrival DOA vectors as represented in Figure 8.

During the localization step 250_2, if more than two directions of arrival have been calculated during the calculating step 230_2, the localization device 30 determines the location of the suspicious watercraft 24 as a mean of the possible locations determined by two crossing directions of arrival. Such situation is illustrated in Figure 8.

As in the first embodiment, the localization method 200_2 optionally comprises the communication step 260.

The identification method 100 and the localization methods 200, 200_2 make it possible to identify and to localize a suspicious watercraft 24 even if such suspicious watercraft 24 is not cooperative. Actually, the methods only require that the suspicious watercraft 24 emits radar signals from a NAVRAD system, which is actually a common tool that most of the watercrafts have.

**Claims**

1.  An identification method (100) for identifying by a satellite system (15), at least one suspicious watercraft (24) among a plurality of watercrafts (10), each watercraft (23, 23A, 23B) having an emitting antenna configured to emit a respective radar signal, which forms an antenna train and comprising a plurality of pulse trains when being received,

    a time interval between two successive pulse trains being substantially constant and called antenna scan interval (ASI),
    each pulse train comprising a plurality of pulses forming a pulse trains shape (BP), a time interval between two successive pulses of a respective pulse train being substantially constant and called pulse repetition interval (PRI),

the method comprising:

- receiving (110) radar signals from the plurality of watercrafts (10);
- determining (120) a respective signature for each watercraft (23A, 24; 23B, 24), from the received radar signals; and
- identifying (130) the suspicious watercraft (24) based on the determined signatures of its emitting antenna;

wherein each signature comprises:

- the pulse repetition interval (PRI) of the emitting antenna;
- the antenna scan interval (ASI) of the emitting antenna; and
- a pulse train shape (BP) of the emitting antenna,

preferably, each signature in addition comprises a frequency (Freq) of each pulse of the emitting antenna and a pulse width (Tp) of each pulse of the emitting antenna.

2. The method (100) according to claim 1, wherein the determining step (120) comprises the following sub-steps:

- a first tagging phase (121), wherein at least one first-level tagging group is formed based on the pulses;
- a second tagging phase (122), wherein at least one second-level tagging group is formed based on the pulse trains; and
- a third tagging phase (123), wherein at least one third-level tagging group is formed based on the antenna trains.

3. The method (100) according to claim 2, wherein the first tagging-phase (121) includes:

- for each pulse of the radar signals, calculating (1212) a pulse width (Tp) and a frequency (Freq);
- classifying (1213) the pulses based on the calculated pulse widths (Tp) and frequencies (Freq) to form the first-level tagging group(s).

4. The method (100) according to claim 2 or 3, wherein during the first tagging phase (121), an amplitude (AMP) of each pulse and a time of arrival (TOA) of each pulse are calculated,
the second tagging phase (122) including for each first-level group:

- identifying (1221) pulse trains from the pulses;
- determining (1222) the pulse repetition interval (PRI) for at least one identified pulse train;
- for each pulse train, determining (1223) the pulse train shape (BP) from the amplitude (AMP) of each pulse of the pulse train and from the time of arrival (TOA) of said pulses; and
- classifying (1225) each pulse train based on the identified pulse train shape (BP) to form the second-level group(s);

preferably, the pulse train shape (BP) being quadratic and being **characterized by** a quadratic coefficient (A) such that:

$$AMP = A.TOA^2 + B.TOA + C$$

where, B and C are respectively a linear coefficient and a constant coefficient.

5. The method (100) according to any of claims 2 to 5, wherein the third tagging phase (123) includes, for each second-level group:

- identifying (1231) antenna trains from the pulses trains;
- determining (1232) the scan interval (ASI) respective to each identified antenna trains; and
- classifying (1234) the antenna trains based on their respective antenna scan interval (ASI) to form the third-level group(s).

6. The method (100) according to claims 4 and 5, wherein the third tagging phase (123) further includes for each antenna train of each third-level group:

- calculating (1234) an antenna train mean pulse repetition interval (PRI_AT) of the antenna train from the pulse repetition intervals (PRI) of each pulse train of the antenna train;
- calculating an antenna's mean pulse train shape (BP_AT) of the antenna train from the pulse train shape (BP) of each pulse train of the antenna train;

the signature respective for each watercraft (23A, 24; 23B, 24) comprising the antenna train mean pulse repetition interval (PRI_AT), the antenna mean pulse train shape (BP_AT) and the antenna scan interval (ASI).

7. The method (100) according to any of claims 2 to 6, wherein during at least one among the first (121), the second (122) or the third (123) tagging phase, a sliding window is applied on the radar signals, the classification being performed only for pulses within the sliding window.

8. The method (100) according to any of the preceding claims, wherein the signature uniquely identifies the suspicious watercraft (24) among the plurality of watercrafts (10).

9. A localization method (200 ; 200_2) for localizing, by a satellite system (15), at least one suspicious watercraft (24) among a plurality of watercrafts (10), each watercraft (23, 23A, 23B) having an antenna emitting a respective radar signal, the localization method (200 ; 200_2) comprising the following steps:

   - acquiring (210, 230 ; 210) the radar signals from the plurality of watercrafts (10);
   - identification (220, 240 ; 220) of the suspicious watercraft (24) from the acquired radar signals;
   - localizing (250 ; 250_2) the suspicious watercraft (24) from a signature of the suspicious watercraft (24) obtained when identifying (220, 240 ; 220) the suspicious watercraft (24); and
   **characterized in that** identifying (220, 240 ; 220) the suspicious watercraft is performed by implementing an identification method (100) according to any of the preceding claims.

10. The localization method (200 ; 200_2) according to the preceding claim, wherein the satellite system (15) comprises a unique satellite (15).

11. The localization method (200) according to any of claims 9 or 10, wherein the satellite system (15) comprises a forward-looking antenna (20A) and a backward-looking antenna (20B),

   the forward-looking antenna (20A) defining a front beam (21A) and the backward-looking antenna (20B) defining a rear beam (21B),
   each beam (21A, 21B) representing watercraft's locations from which radar signals are acquirable by the satellite system (15),
   the satellite system (15) moving with respect to the watercrafts (10), the suspicious watercraft (24) being in the front beam (21A) at a first instant and in the rear beam (21B) at a second instant distinct from the first instant,
   wherein acquiring (210, 230) the radar signals from the plurality of watercrafts (10) comprises:

      - a first acquiring step (210) of the radar signals from the plurality of watercrafts (10), from the forward-looking antenna (20A), at the first instant; and
      - a second acquiring step (230) of the radar signals from the plurality of watercrafts (10), from the backward-looking antenna (20B), at the second instant,

   identification (220, 240) of the suspicious watercraft (24) from the acquired radar signals comprising:

      - a first identification step (220) of the suspicious watercraft (24) from the radar signals acquired during the first acquiring step (210); and
      - a second identification step (240) of the suspicious watercraft (24) from the radar signals acquired during the second acquiring step (230),

   localizing (250) the suspicious watercraft (24) from a signature of the suspicious watercraft (24) obtained when identifying (220, 240) the suspicious watercraft (24) comprises : performing a triangulation of the location of the suspicious watercraft (24) from a first signature obtained during the first identification step (220) and a second signature obtained during the second identification step (240).

12. The localization method (200 ; 200_2) according to the preceding claim, wherein each beam defines a narrow angular opening, preferably between 1.2 and 6 degrees.

13. An electronic identification device (25) comprising technical means configured to implement an identification method (100) according to any of the claims 1 to 8.

14. A electronic localization device (30) comprising technical means configured to implement a localization method (200 ; 200_2) according to any of the claims 9 to 12.

15. A computer program comprising software instruction(s) which, when being executed by a computer, implement a method (100 ; 200 ; 200_2) according to any of the preceding claims.

FIG.1

EP 4 332 610 A1

FIG.2

EP 4 332 610 A1

## FIG.3

| | | | | | | | | |
|---|---|---|---|---|---|---|---|---|
| Time of arrival | $TOA_1$ | $TOA_2$ | . . . | $TOA_n$ | . . . | $TOA_{n+k}$ | . . . | $TOA_N$ |
| Pulse width | $Tp_1$ | $Tp_2$ | . . . | $Tp_n$ | . . . | $Tp_{n+k}$ | . . . | $Tp_N$ |
| Frequency | $Freq_1$ | $Freq_2$ | . . . | $Freq_n$ | . . . | $Freq_{n+k}$ | . . . | $Freq_N$ |
| Amplitude | $AMP_1$ | $AMP_2$ | . . . | $AMP_n$ | . . . | $AMP_{n+k}$ | . . . | $AMP_N$ |

## FIG.4

EP 4 332 610 A1

200

```
┌─────────────────┐
│       210       │
└─────────────────┘
         │
         ▼
┌─────────────────┐
│       220       │
└─────────────────┘
         │
         ▼
┌─────────────────┐
│       230       │
└─────────────────┘
         │
         ▼
┌─────────────────┐
│       240       │
└─────────────────┘
         │
         ▼
┌─────────────────┐
│       250       │
└─────────────────┘
         │
         ▼
┌─────────────────┐
│       260       │
└─────────────────┘
```

## FIG.5

FIG.6

EP 4 332 610 A1

200_2

210

220

230_2

250_2

260

FIG.7

D

15   15   15   15

24

FIG.8

Europäisches
Patentamt
European
Patent Office
Office européen
des brevets

# EUROPEAN SEARCH REPORT

Application Number

EP 22 19 3403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/165604 A1 (HORIZON TECH CONSULTANTS LTD [GB]) 20 August 2020 (2020-08-20) * paragraphs [0015] - [0025] * * figure 1 * | 1-15 | INV. G01S5/02 G01S5/04 |
| A | WO 2006/073473 A2 (BAE SYSTEMS INFORMATION [US]; SCHIFFMILLER RICHARD [US] ET AL.) 13 July 2006 (2006-07-13) * the whole document * | 1-15 | |
| A | WO 2019/005436 A1 (HAWKEYE 360 INC [US]) 3 January 2019 (2019-01-03) * the whole document * | 1-15 | |

TECHNICAL FIELDS
SEARCHED      (IPC)

G01S

The present search report has been drawn up for all claims

| Place of search | Date of completion of the search | Examiner |
|---|---|---|
| Munich | 14 February 2023 | Hirsch, Stefanie |

EPO FORM 1503 03.82 (P04C01)

## EP 4 332 610 A1

### ANNEX TO THE EUROPEAN SEARCH REPORT
### ON EUROPEAN PATENT APPLICATION NO.

EP 22 19 3403

14-02-2023

| Patent document cited in search report | | Publication date | Patent family member(s) | | Publication date |
|---|---|---|---|---|---|
| WO 2020165604 | A1 | 20-08-2020 | EP | 3924748 A1 | 22-12-2021 |
| | | | US | 2020264318 A1 | 20-08-2020 |
| | | | US | 2022082707 A1 | 17-03-2022 |
| | | | WO | 2020165604 A1 | 20-08-2020 |
| WO 2006073473 | A2 | 13-07-2006 | GB | 2428923 A | 07-02-2007 |
| | | | IL | 179425 A | 31-03-2011 |
| | | | US | 2005275588 A1 | 15-12-2005 |
| | | | WO | 2006073473 A2 | 13-07-2006 |
| WO 2019005436 | A1 | 03-01-2019 | CA | 3067545 A1 | 03-01-2019 |
| | | | EP | 3646647 A1 | 06-05-2020 |
| | | | EP | 4138470 A1 | 22-02-2023 |
| | | | US | 2019004144 A1 | 03-01-2019 |
| | | | US | 2020064434 A1 | 27-02-2020 |
| | | | US | 2021190896 A1 | 24-06-2021 |
| | | | WO | 2019005436 A1 | 03-01-2019 |

EPO FORM P0459